# EUROPEAN PATENT SPECIFICATION

(11) **EP 1 524 547 B1**
(45) Date of publication and mention of the grant of the patent: **14.11.2012**
(21) Application number: 04020767.2
(22) Date of filing: 01.09.2004
(51) Int. Cl.: G02C 5/22

(54) **Elastic hinge particularly for monobloc temples**
Federscharnier insbesondere für einstückige Bügel
Charnière élastique en particulier pour branches monoblocs

(30) Priority: 13.10.2003 IT TV20030139
(43) Date of publication of application: 20.04.2005
(73) Proprietor: VISOTTICA Industrie S.p.A., I-31058 Susegana (IT)
(72) Inventor: Montalban, Rinaldo, 30100 Venezia (IT)
(74) Representative: Modiano, Micaela Nadia

(56) References cited:
- EP-A- 0 512 173
- EP-A- 1 279 991
- EP-A2- 0 207 190
- DE-C- 4 339 517
- FR-A- 2 690 760
- US-A- 5 115 540

## Description

The present invention relates to an elastic hinge particularly for monobloc temples.

Known types of frames for eyeglasses are usually constituted by a front, which supports one or two lenses and to which two temples or side-members are hinged laterally; said temples must substantially assume an open position, in which they are arranged around the temples of the user, and a closed position, in which they are adjacent to the front in order to store the frame in an appropriately provided case.

Systems are also known which allow the temples to open even beyond the position for use, so as to make it easier to put them on.

The importance of the hinge for connecting the temples or side-members and the front is therefore evident, since an advantageous configuration thereof can produce a considerable improvement in the performance of the frame in which it is installed.

Currently it is known to use, in order to achieve a connection between the temple and the front, substantially a very small screw, which acts as a connecting pivot between one end of a first lug, which is formed on or associated with each temple, and a second lug, which is formed on or associated with the front, ensures the coupling of said components and allows the rotation of the temples about the axis of said screw, so as to provide the transition from the active position to the closed position and vice versa.

This known type of solution, however, has several drawbacks, including the need to provide possibly threaded holes in the first and second lugs, and the fact that the screw is subject to partial or total unscrewing as a consequence of normal use of the frame, and this can cause accordingly the disarticulation thereof.

FR-2690760 discloses an elastic hinge suitable for use on frames for eyeglasses, which comprises a first element and a second element, which are connected by way of a connecting means, a first articulation surface and a second articulation surface being formed respectively on said first element and on said second element, said elements being in contact by way of said surfaces, the first surface forming a hollow dihedral and the second surface forming two protruding dihedrals, which share a common plane.

At the temple there is a seat for a connecting means, which is constituted by a shaft that is provided with a spherical head and by a stem that is associated, so that it can slide in contrast with a spring, with a support that is rigidly coupled to the temple by means of a retention element.

The main drawback of this known type of solution is that the coupling of the spherical head to the element that constitutes the front is complicated and requires the use of an appropriately provided apparatus.

Another drawback of this known type of solution is that it is composed of a large number of components, making hinge assembly long and complicated.

EP-A-1 279 991 discloses an elastic hinge for eyeglasses, comprising a female element, which is coupled to the front of the eyeglasses and in which a bulbous wider head portion of a male element engages so as to provide articulation. The female element is provided with a transverse blind hole, which lies in the inner part of the female element with respect to the front of the eyeglasses and has dimensions that allow the insertion of the head of the male element, with an end portion that lies along the longitudinal extension of the element, toward the temple. The blind hole and its end portion is connected to a slot. The head portion of the male element is inserted within the female element through the transverse blind hole and then, following the rotation of the male element whose portion with flat regions passes through the slot, into the end portion of the blind hole.

The aim of the present invention is to solve the above-mentioned problems, eliminating the drawbacks of the cited background art by providing an elastic hinge, particularly for monobloc temples, that can be assembled easily and without the aid of appropriately provided apparatuses.

Within this aim, an object of the invention is to allow the temple to perform a limited rotation also beyond the position for use of the frame, reaching a so-called overtravel position, and further ensuring automatic resumption of the active position when the temple is left free from external actions starting from a condition in which it is open wider than needed for use.

Another object is to provide an elastic hinge that allows to obtain a safe and effective connection between the temples and the front, ensuring the coupling of these components in all the positions that can be assumed by the temple with respect to the front, from the closed position to the overtravel position.

Another object of the invention is to ensure the interchangeability of the temples, allowing their easy separation from the front and easy assembly of a new temple or of a new front.

Another object is to provide an elastic hinge that is structurally simple and has low manufacturing costs.

This aim and these and other objects that will become better apparent and hereinafter are achieved by an elastic hinge particularly for monobloc temples according to claim 1.

Further characteristics and advantages of the present invention will become better apparent from the following detailed description of a particular but not exclusive embodiment thereof, illustrated by way of nonlimiting example in the accompanying drawings, wherein:

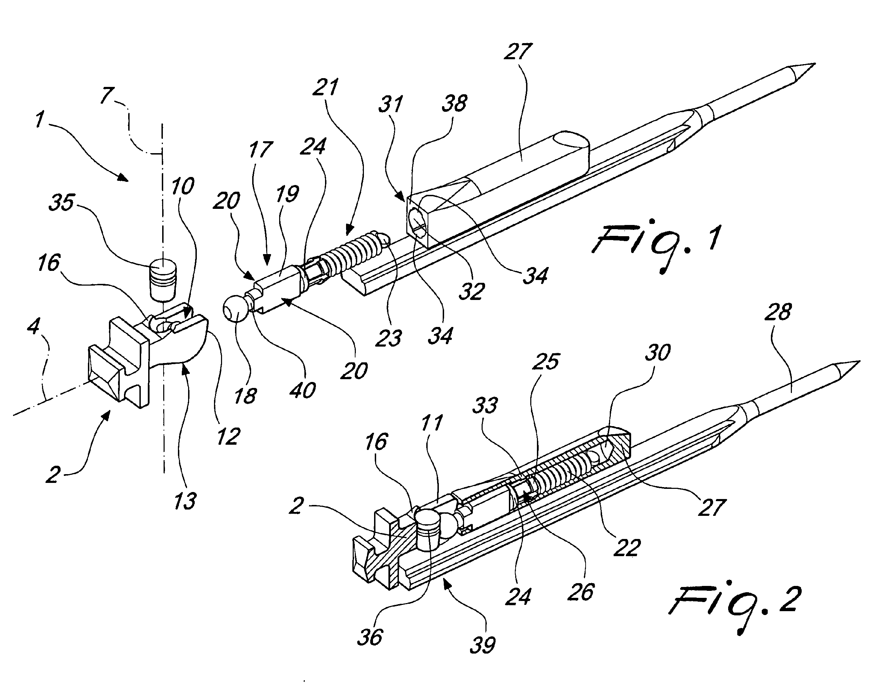

Figure 1 is an exploded perspective view of the hinge according to a first embodiment of the invention;
Figure 2 is a partially sectional perspective view of the hinge according to a first embodiment, in the assembled condition;
Figures 3 to 6 are partially sectional top views of the method for assembling the hinge according to the first embodiment;
Figure 7 is an exploded perspective view of a second embodiment for the hinge;
Figure 8 is a partially sectional perspective view of the hinge of Figure 7;
Figure 9 is a perspective view of the lug;
Figures 10 to 12 are perspective views of the lug, shown exploded along three imaginary and mutually parallel vertical planes in order to clarify its shape;

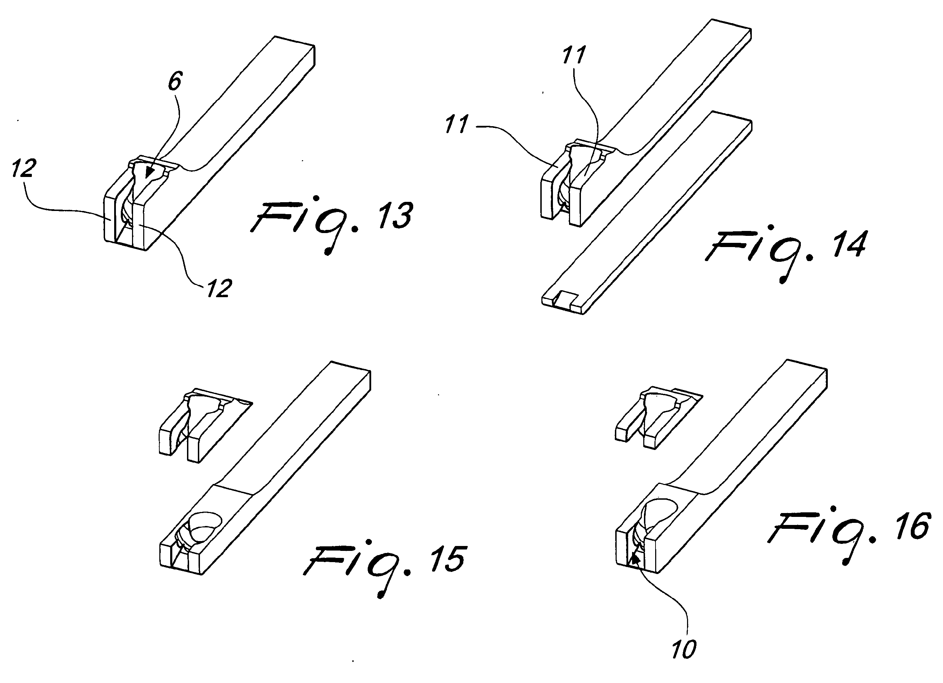

Figure 13 is a perspective view, similar to Figure 9, of the lug;
Figures 14 to 16 are perspective views of the lug, shown exploded along three imaginary and mutually parallel horizontal planes.

In the embodiments that follow, individual characteristics, given in relation to specific examples, may actually be interchanged with other different characteristics that exist in other embodiments.

With reference to the figures, a hinge according to the present invention, generally designated by the reference numeral 1, comprises a lug 2, which can be connected for example to a front 3 of a frame for eyeglasses and in the illustrated embodiment lies substantially at right angles to the plane of said front that contains the lenses; the lug 2 is extended along a first longitudinal axis, designated by the reference numeral 4.

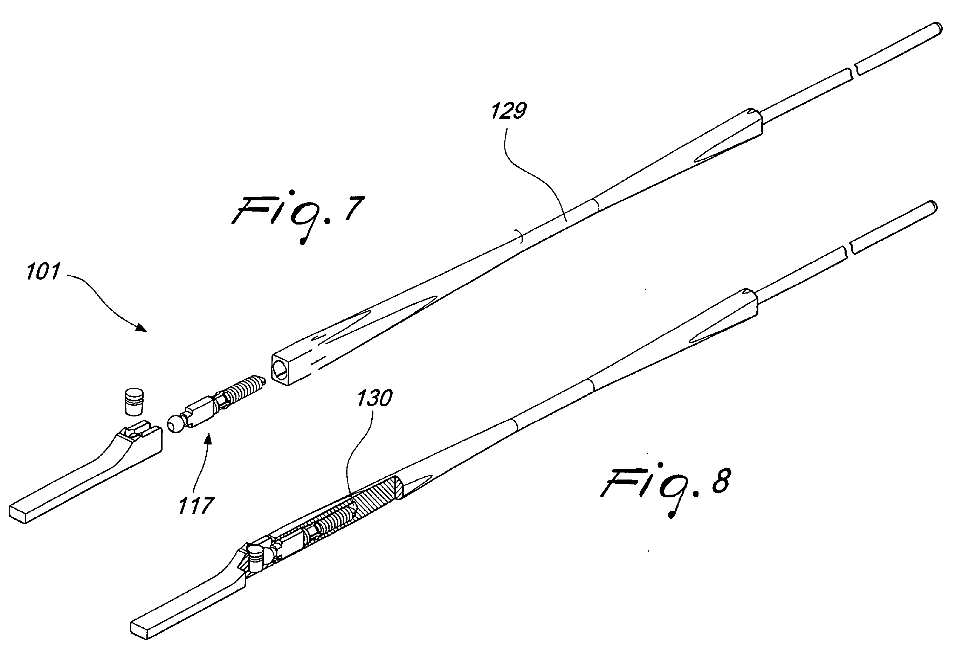

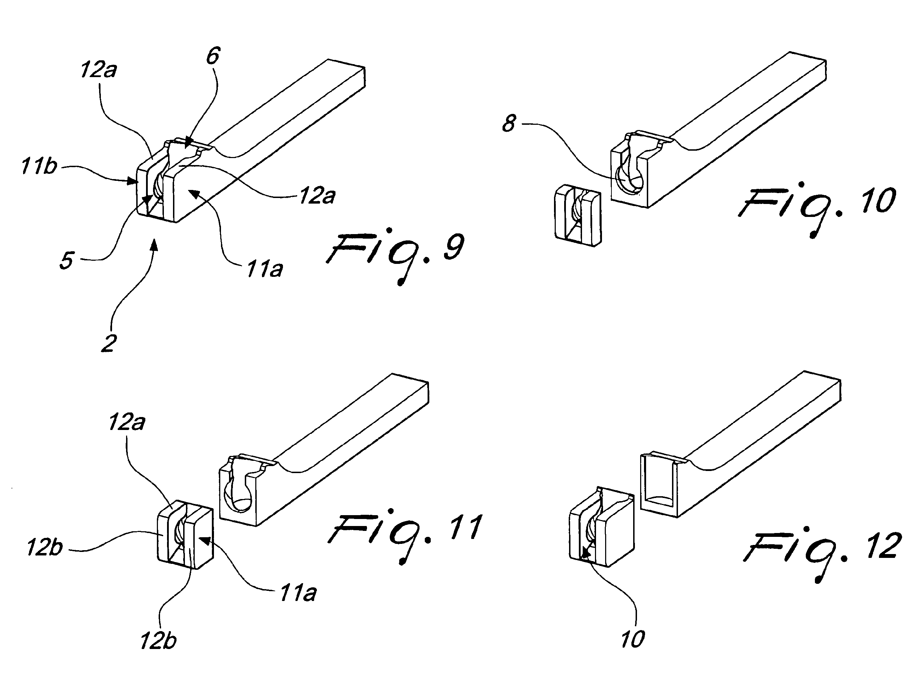

In the description that follows, the same reference numeral also designates the same components of the embodiment shown in Figures 7 to 12.

Inside the lug 2 there is a first substantially spherical seat 5, which is connected, by means of a duct 8, to a second seat 6; the first and second seats are open at one of their ends, in that they can be accessed from the outside of the lug 2.

The second seat 6 is substantially cylindrical and is arranged along a second longitudinal axis 7, which is substantially perpendicular to the first longitudinal axis 4 of the lug 2.

The first seat 5 and the second seat 6 are mutually connected by means of a duct 8, which is curved or straight and has a third longitudinal axis 9 that is inclined with respect to the first longitudinal axis 4 of the lug 2.

The lug 2 further has an end slot 10, provided along the first longitudinal axis 4, which forms two shoulders 11 a and 11b between which the first seat 5, the duct 8 and the second seat 6 act, the distance between said pair of shoulders being less than a diameter of the first seat 5.

Each one of said shoulders forms, in turn, a first upper surface 12a and a second front surface 12b.

The lug 2 further comprises, on the opposite side with respect to the second seat 6, a contoured surface 13, which is closed and forms, proximate to the bottom of the second seat 6, a third lower surface 14, which is substantially flat and is blended with a fourth curved surface 15.

The first seat 5 and the duct 8 are formed in an upper region at said fourth surface.

The third lower surface 14 is inclined with respect to the first upper surface 12a, so as to diverge from it away from the second seat 6.

An abutment tooth 16 is further provided on the lug 2, at each one of the first upper surfaces 12a; its function is described in greater detail hereinafter, and it protrudes from the first upper surface 12a proximate to the second seat 6 and is directed toward the second front surface 12b.

The hinge 1 further comprises a connecting element 17, which is substantially elongated and supports a spherical head 18 at a first end, said head having such dimensions that it can be accommodated within the first seat 5 and can abut against the lateral surface of said first seat.

The head 18 is connected, by means of a stem 40, to a body 19, which is shaped for example like a parallelepiped and forms fifth lateral surfaces 20, which are for example parallel to each other.

The connecting element 17 is completed by an elongated region 21, which is substantially rod-shaped and supports coaxially elastic means constituted by an elastic element 22, constituted for example by a spring, which is interposed between a first abutment 23, formed at the end of the connecting element 17 that lies opposite the end that supports the head 18, and a locking element 24.

By way of example, said first abutment can be obtained by plastically deforming said end so as to obtain a wider region suitable to prevent the elastic element 22 from sliding off.

The locking element 24 is supported so that it can slide by the connecting element 17 by way of the elongated region 21; the action of the elastic element 22 is directed so as to contrast said sliding, pushing the locking element against the body 19.

Said locking element can be constituted for example by a ring that supports a plurality of longitudinal fins 25 that have a limited elastic deformability and also are each provided with a narrower central region 26, so as to form, along the entire outside perimeter of the locking element, a region that has a reduced diameter.

The hinge 1 further comprises a containment element 27, which is elongated and is suitable to be connected to a metallic core 28 of a temple 29, for example of the monobloc type, for frames of eyeglasses.

A cavity 30 is formed longitudinally inside the containment element or body 27, is open at a first end 31 of the containment element or body 27, and is suitable to contain at least partially the connecting element 17, the locking element 24 and the elastic element 22 assembled as shown above.

A second abutment 33 is formed along the internal surface 32 of the cavity 30 and is constituted for example by a protrusion that is extended toward the inside of said cavity and is suitable to be accommodated inside the narrower region 26 of the longitudinal fins 25, defining the position of the locking element 24 with respect to the containment element 27.

Further, the cavity 30 has, at its open end, slots 34 that are formed on a portion of the internal surface 32 and are contoured so as to engage against at least one portion of the fifth lateral surfaces 20 of the body 19, so as to prevent, once the connecting element 17 is inserted in the cavity 30, rotations thereof with respect to said cavity.

The hinge 1 further comprises a plug 35, which is for example made of plastics and substantially cylindrical; said plug is suitable to be accommodated detachably within the second seat 6 so as to prevent axial sliding of the head 18 and is provided with one or more circumferential grooves or slots 36, which are formed on its lateral surface and are suitable to facilitate the extraction of the plug.

The dimensions of the various components described above are such that once the connecting element 17 has been inserted in the cavity 30, since the locking element 24 is coupled by means of the second abutment 33, the head 18 protrudes completely from the cavity 30.

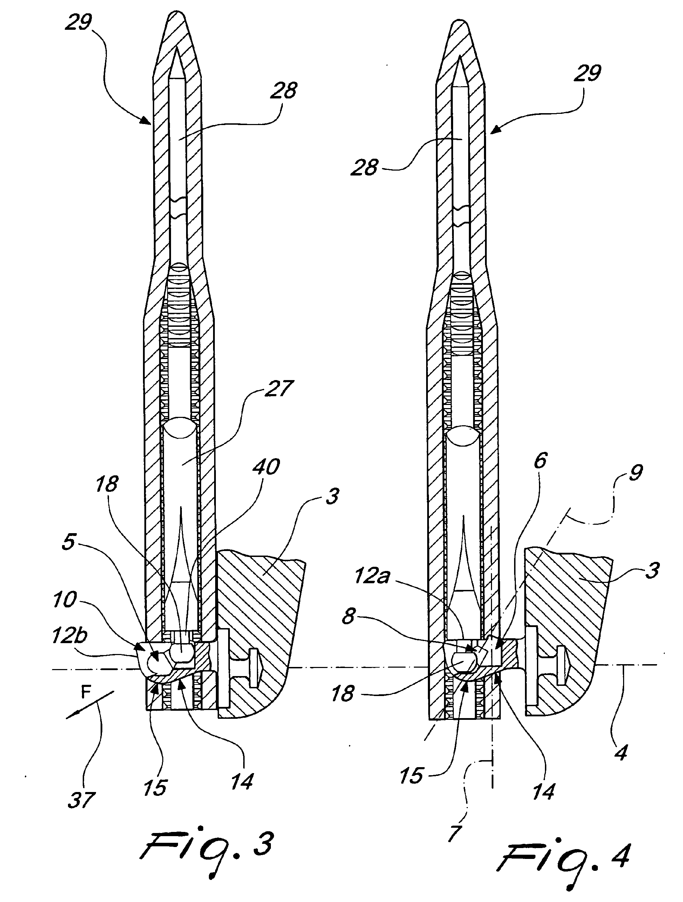

The assembly of the hinge 1 according to the invention, once the connecting element 17 has been inserted in the cavity 30 as described above, is shown in Figures 3 to 6, in which said hinge is shown applied to a temple 29.

In the assembly process, the temple 29, on which the containment element 27 that contains the connecting element 17 is applied for example by welding, said connecting element 17 in turn supporting the locking element 24 and the elastic element 22, is arranged adjacent to the front and parallel thereto, so that the head 18 is inserted in the second seat 6, as shown in Figure 3.

Once the head 18 has been inserted in said second seat, the temple 29 is subjected to a translational motion by imparting a force F along an axis designated by the reference numeral 37, so that the head 18 moves along the duct 8 until it is accommodated in the first seat 5, reaching the configuration shown in Figure 4, in which the temple 29 is spaced from the front 3.

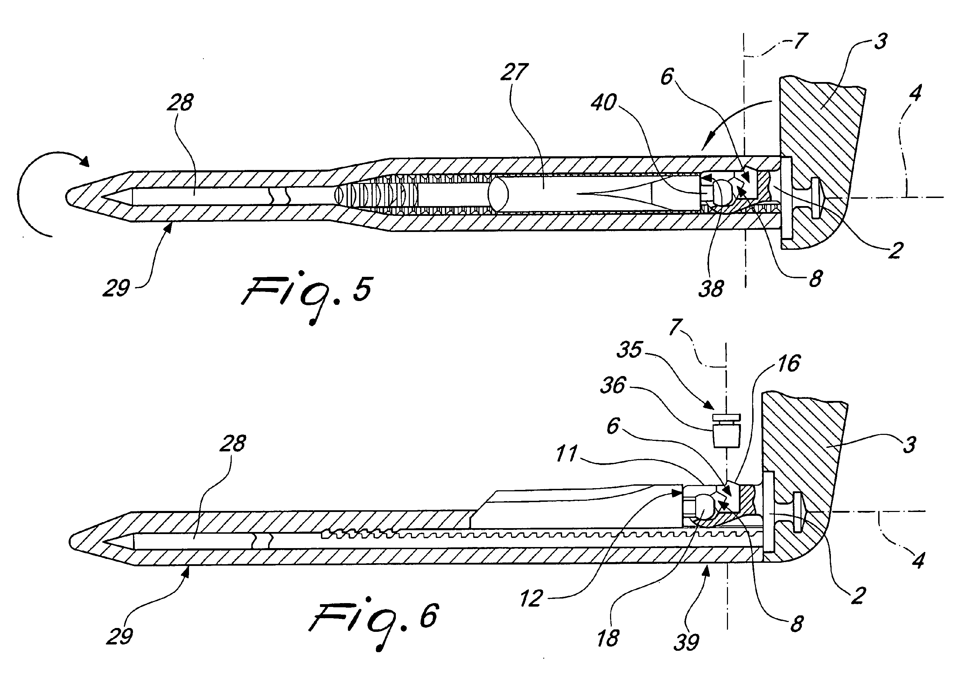

The assembly of the hinge 1 then entails imparting a rotation of approximately 90°, centered on the head 18, to the temple 29, said head remaining always accommodated inside the first seat 5, so as to move away from the front 3, until it assumes a position that is substantially perpendicular with respect to said front, as shown in Figure 5.

Another step of assembly then consists in turning the temple 29 about its own longitudinal axis until the final configuration, shown in Figure 6, is reached.

To complete the assembly process, the second seat 6 is closed removably by inserting the plug 35, so as to limit the axial sliding of the head 18.

In this manner, contact is achieved between the second front surface 12b of the lug 2 and the surface 38 of the containment element 27, providing the pivoting of the temple 29 with respect to the front 3.

The rotation of the temple 29 about its own longitudinal axis is rendered necessary by the fact that since the containment element 27 is arranged at a certain distance from the end 39 of the temple 29 for aesthetic and functional reasons, it would not be possible to perform the first step of assembly, i.e., the insertion of the head 18 in the second seat 6, without arranging the temple 29 adjacent to the front 3 in a position that is rotated about its own longitudinal axis, in order to avoid interferences between said temple and the lug 2.

In a suitable constructive solution, the plug 35 can be made of plastic material, so as to utilize the elasticity of said material, while all the other elements can be conveniently made of metal.

Further, it is possible to cover the metallic core 28 of the temple by means of plastic material, in order to make it more comfortable to use the frame.

The operation of the hinge according to the invention is therefore immediately understandable, since the temple 29 can rotate freely with respect to the front 3 about the fulcrum constituted by the spherical head 18 and the first seat 5, allowing to open and close the frame for eyeglasses according to the needs of the user.

During the transition from the open position to the closed position and vice versa, the surface 38 of the containment element 27 remains in contact with the lug 2, adhering respectively to the second front surface 12b and to the first upper surface 12a, and vice versa.

During this transition, provided by means of a rotation of the temple 29 about the center of the head 18, the containment element is at a variable distance from said point, as a consequence of the action applied by the first upper surface 12a and by the second front surface 12b, which depends on the profile of said surfaces, to the surface 38.

Said translational motion of the surface 38 with respect to the center of the head 18 is allowed by the sliding of the locking element 24, which is rigidly coupled to the containment element 27, with respect to the connecting element 17, said movement being contrasted by the compression of the elastic element 22.

It is therefore evident that the action of said elastic element helps to stabilize the position of the temple 29 with respect to the front 3 in the two open and closed positions.

The configuration of the contoured surface 13 of the lug 2 further allows an opening that is wider than the opening for normal use, the breadth of said opening being controlled by way of the inclination of the third lateral surface 14, which acts as an abutment for the end 39 of the temple, so as to make it easier to put on the frame.

In the closed position, the tooth abutment 16 constitutes an abutment for the correct positioning of the temple 29.

The presence of the plug 35 further constitutes a hindrance to any accidental escape of the head 18 from the first seat 5, thus preventing any disarticulation of the hinge 1.

The grooves 36 provided on the lateral surface of the plug 35 allow, if it becomes necessary to replace a temple or the front, to extract said plug, possibly with the aid of suitable tools, so as to allow to separate the temple 29 and the front 3 according to a method that is the reverse of the one described above for assembly.

It has thus been found that the invention has achieved the intended aim and objects, an elastic hinge particularly for monobloc temples having been devised which allows easy assembly and connection of a temple to a front of a frame for eyeglasses.

Further, the elastic hinge according to the invention ensures a safe coupling, since disarticulation of the system is prevented.

Another object achieved by the invention is the assurance of interchangeability of the temples of a frame, allowing quick disassembly of the elastic hinge when necessary.

The invention is of course susceptible of numerous modifications and variations, all of which are within the scope of the appended claims.

Thus, for example, it is possible to provide an elastic hinge according to a second embodiment, illustrated in Figures 7 and 8 and generally designated by the reference numeral 101.

Said second embodiment differs from the first one in that the cavity 130, designed to accommodate the coupling element 117, is formed directly inside the temple 129.

The assembly of the invention according to said second embodiment is similar to the one described above for the first embodiment, except for the rotation about the longitudinal axis of the temple, which in this second case is not provided because it is not necessary.

Operation is entirely similar to the operation described for the first embodiment.

The materials used, as well as the dimensions that constitute the individual components of the invention, may of course be more pertinent according to specific requirements.

The various means for performing certain different functions need not certainly coexist only in one of the illustrated embodiments but can be present alone in the other embodiments, including equivalent ones, that are not illustrated and which will fall within the terms of the appended claims.

The characteristics that are described as advantageous, convenient or the like can also be omitted or be replaced with equivalents.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An elastic hinge particularly for monobloc temples, comprising
a lug (2) that can be connected to a front (3) of a frame for eyeglasses such that it protrudes from said front (3) of said frame, said lug extending along a longitudinal axis (4) and having a first spherical seat (5) that is connected to a second cylindrical seat (6) having an axis (7) that is substantially perpendicular to said longitudinal axis (4) of said lug (2),
a substantially elongated connecting element (17) that supports a spherical head (18) at a first end, the dimensions of said head (18) being such that it can be accommodated within said first seat (5) and abut against the lateral surface of said first seat (5), said connecting element (17) comprising an elongated region (21), which is substantially rod-shaped, and supports coaxially elastic means constituted by an elastic element (22), which is interposed between a first abutment (23) formed at one end of said connecting element (17) that lies opposite the end that supports said head (18) and a locking element (24) that is slidably supported by said connecting element (17) by way of said elongated region (21),
an elongated containment element (27) adapted to be connected to or formed directly in, a temple for a frame for eyeglasses, a cavity (30) being formed longitudinally inside said containment element (27), said cavity (30) being open at a first end (31) of said containment element (27) and being suitable to contain at least partially said connecting element (17), said locking element (24) and said elastic element (22),
said spherical head (18) being able to move axially with respect to said containment element (27) counter to said elastic element (22),
**characterised in that** said spherical head (18) protrudes completely from said cavity (30), and said first spherical seat (5) is connected by way of a first duct (8) that is inclined with respect to the longitudinal axis (4) of said lug (2) to said second cylindrical seat (6), the spherical head (18) being insertable within the second seat (6) from where it can be moved translationally within the inclined duct (8) towards the first spherical seat (5), the hinge further comprising a plug (35) being detachably insertable within said second seat (6) so as to prevent axial sliding of said head (18).

2. The elastic hinge according to claim 1, **characterized in that** said lug (2) has an end slot (10), which is provided along said longitudinal axis (4) and forms two shoulders (11a, 11b) between which said first seat (5), said second seat (6) and said duct (8) are arranged, the distance between said pair of shoulders (11a, 11b) being smaller than a diameter of said first seat (5).

3. The elastic hinge according to claim 2, **characterized in that** each one of said shoulders (11a, 11b) forms, on said lug (2), a first upper surface (12a) and a second front surface (12b), said lug (2) further comprising, on the opposite side with respect to said second seat (6), a closed contoured surface (13) that forms, proximate to the bottom of said second seat (6), a third substantially flat lower surface (14), which is blended with a fourth curved surface (15), at which said first seat (5) and said duct (8) are formed in an upper region.

4. The elastic hinge according to claim 3, **characterized in that** said third lower surface (14) is inclined with respect to said first upper surface (12a) and diverges from it in the opposite direction with respect to said second seat (6).

5. The elastic hinge according to claim 4, **characterized in that** an abutment tooth (16) is formed on said lug (2) at each one of said first upper surfaces (12a), protrudes from the respective first upper surface (12a), proximate to said second seat (6), and is directed toward said second front surface (12b).

6. The elastic hinge (1) according to one or more of the preceding claims, **characterized in that** said spherical head (18) is connected, by way of a stem (40), to a body (19) that is part of said connecting element (17) and forms fifth lateral surfaces (20) that are mutually parallel, said elongated region (21) being connected at one end to said body (19).

7. The elastic hinge (1) according to claim 6, **characterized in that** said locking element (24) is constituted by a ring that supports a plurality of longitudinal fins (25) that have limited elastic deformability, each one of said fins (25) having a narrower central region (26), said central regions (26) forming a region having a reduced diameter along an external perimeter of said locking element (24).

8. The elastic hinge (1) according to claim 7, **characterized in that** a second abutment (33) is formed along an internal surface (32) of said cavity (30) and is constituted by a protrusion that extends toward the inside of said cavity (30) and can be accommodated inside said narrower region of said longitudinal fins (25).

9. The elastic hinge (1) according to claim 8, **characterized in that** said cavity (30) has, at said open end, one or more slots (34), which are formed on a portion of said internal surface (32) and are contoured so as to engage against at least one portion of said fifth lateral surfaces (20).

10. The elastic hinge according to one or more of the preceding claims, **characterized in that** said plug (35) is provided with one or more circumferential grooves or slots (36) formed on its lateral surface.

11. The elastic hinge according to one or more of the preceding claims, **characterized in that** said plug (36) is made of plastic material.

12. A method for assembling a hinge according to any of the preceding claims, comprising the steps of:
a. placing a temple (29) connected to said elongated containment element (27) substantially adjacent to said front (3) of a frame for eyeglasses connected to said lug (2);
b. inserting, along an axis (4) that is longitudinal with respect to said temple (29), said spherical head (18) of said hinge within said second seat (6) of said lug (2), said lug (2) protruding at a right angles from said front (3);
c. a translational motion, on the opposite side with respect to the front (3), of said spherical head (18) within said inclined duct (8) provided in said lug (2);
d. accommodating said spherical head (18) within said first spherical seat (5) formed in said lug (2);
e. rotating said temple (29) away from said front (3);
f. rotating said temple (29) about its own longitudinal axis;
g. closing said second seat (6) with said plug (35), so as to block the movement of said head (18) in an axial direction.

## Patentansprüche

1. Ein Federscharnier, insbesondere für einteilige Bügel, das Folgendes umfasst:
einen Vorsprung (2), der mit einer Vorderseite (3) eines Rahmens für eine Brille verbunden werden kann, so dass er aus der Vorderseite (3) des Rahmens herausragt, wobei sich der Vorsprung entlang einer Längsachse (4) erstreckt und einen ersten, kugelförmigen Sitz (5) hat, der mit einem zweiten, zylindrischen Sitz (6) verbunden ist, welcher eine Achse (7) hat, die im Wesentlichen senkrecht zu der Längsachse (4) des Vorsprungs (2) ist,
ein im Wesentlichen verlängertes Verbindungselement (17), das an einem ersten Ende einen kugelförmigen Kopf (18) trägt, wobei die Maße des Kopfs (18) derart sind, dass er in dem ersten Sitz (5) untergebracht werden kann und gegen die seitliche Oberfläche des ersten Sitzes (5) anstoßen kann, wobei das Verbindungselement (17) einen verlängerten Bereich (21) umfasst, der im Wesentlichen stabförmig ist und koaxial elastische Mittel trägt, die in einem elastischen Element (22) bestehen, welches zwischen einem ersten Widerlager (23) angeordnet ist, das an einem Ende des Verbindungselements (17) geformt ist, welches dem Ende gegenüberliegt, das den Kopf (18) trägt, und einem Verriegelungselement (24), das verschiebbar von dem Verbindungselement (17) getragen wird, und zwar durch den verlängerten Bereich (21),
ein verlängertes Behälterelement (27), das ausgebildet ist, um mit einem Bügel für einen Rahmen für eine Brille verbunden oder direkt darin geformt zu sein, wobei ein Hohlraum (30) in Längsrichtung innerhalb des Behälterelements (27) geformt ist, wobei der Hohlraum (30) an einem ersten Ende (31) des Behälterelements (27) offen und geeignet ist, das Verbindungselement (17), das Verriegelungselement (24) und das elastische Element (22) zumindest teilweise aufzunehmen,
wobei der kugelförmige Kopf (18) sich axial in Bezug zum Behälterelement (27) gegen das elastische Element (22) bewegen kann,
**dadurch gekennzeichnet, dass** der kugelförmige Kopf (18) vollständig aus dem Hohlraum (30) herausragt und der erste, kugelförmige Sitz (5) über eine erste Führung (8), die im Verhältnis zur Längsachse (4) des Vorsprungs (2) geneigt ist, mit dem zweiten, zylindrischen, Sitz (6) verbunden ist, wobei der kugelförmige Kopf (18) in den zweiten Sitz (6) einsetzbar ist, von wo er in einer Translationsbewegung innerhalb der geneigten Führung (8) zum ersten, kugelförmigen Sitz (5) hin bewegt werden kann, wobei das Scharnier weiter einen Stöpsel (35) umfasst, der lösbar in den zweiten Sitz (6) einsetzbar ist, um eine axiale Verschiebung des Kopfs (18) zu verhindern.

2. Das Federscharnier gemäß Anspruch 1, **dadurch gekennzeichnet, dass** der Vorsprung (2) einen Endschlitz (10) hat, der entlang der Längsachse (4) geformt ist und zwei Schultern (11a, 11b) bildet, zwischen denen der erste Sitz (5), der zweite Sitz (6) und die Führung (8) angeordnet sind, wobei der Abstand zwischen dem Paar von Schultern (11a, 11b) kleiner ist als ein Durchmesser des ersten Sitzes (5).

3. Das Federscharnier gemäß Anspruch 2, **dadurch gekennzeichnet, dass** jede der Schultern (11a, 11b) an dem Vorsprung (2) eine erste, obere Oberfläche (12a) und eine zweite, vordere Oberfläche (12b) bildet, wobei der Vorsprung (2) weiter, an der Seite gegenüber vom zweiten Sitz (6), eine geschlossene konturierte Oberfläche (13) umfasst, welche, nahe dem Boden des zweiten Sitzes (6), eine dritte, im Wesentlichen flache, untere Oberfläche (14) bildet, die in eine vierte, gekrümmte Oberfläche (15) übergeht, an welcher der erste Sitz (5) und die Führung (8) in einem oberen Bereich geformt sind.

4. Das Federscharnier gemäß Anspruch 3, **dadurch gekennzeichnet, dass** die dritte untere Oberfläche (14) im Verhältnis zu der ersten oberen Oberfläche (12a) geneigt ist und von ihr in der Richtung abzweigt, die dem zweiten Sitz (6) entgegengesetzt ist.

5. Das Federscharnier gemäß Anspruch 4, **dadurch gekennzeichnet, dass** ein Widerlagerzahn (16) an dem Vorsprung (2) an jeder der ersten oberen Oberflächen (12a) geformt ist, aus der entsprechenden ersten, oberen Oberfläche (12a), nahe dem zweiten Sitz (6), herausragt und zu der zweiten, vorderen Oberfläche (12b) hin gerichtet ist.

6. Das Federscharnier (1) gemäß einem oder mehreren der obigen Ansprüche, **dadurch gekennzeichnet, dass** der kugelförmige Kopf (18), über einen Schaft (40), mit einem Körper (19) verbunden ist, der Teil des Verbindungselements (17) ist und fünfte seitliche Oberflächen (20) bildet, die zueinander parallel sind, wobei der verlängerte Bereich (21) an einem Ende mit dem Körper (19) verbunden ist.

7. Das Federscharnier (1) gemäß Anspruch 6, **dadurch gekennzeichnet, dass** das Verriegelungselement (24) in einem Ring besteht, der eine Vielzahl von Längsrippen (25) trägt, welche eine begrenzte elastische Verformbarkeit haben, wobei jede der Rippen (25) einen schmaleren zentralen Bereich (26) hat, wobei die zentralen Bereiche (26) einen Bereich mit einem reduzierten Durchmesser entlang einem äußeren Umfang des Verriegelungselements (24) bilden.

8. Das Federscharnier (1) gemäß Anspruch 7, **dadurch gekennzeichnet, dass** ein zweites Widerlager (33) entlang einer inneren Oberfläche (32) des Hohlraums (30) geformt ist und in einem Vorsprung besteht, der sich zur Innenseite des Hohlraums (30) hin erstreckt und in dem schmaleren Bereich der Längsrippen (25) aufgenommen werden kann.

9. Das Federscharnier (1) gemäß Anspruch 8, **dadurch gekennzeichnet, dass** der Hohlraum (30) an dem offenen Ende einen oder mehrere Schlitze (34) hat, die an einem Abschnitt der inneren Oberfläche (32) geformt sind und so konturiert sind, dass sie mindestens einen Abschnitt der fünften seitlichen Oberflächen (20) halten.

10. Das Federscharnier gemäß einem oder mehreren der obigen Ansprüche, **dadurch gekennzeichnet, dass** der Stöpsel (35) mit einer/m oder mehreren Ringnuten oder Schlitzen (36) versehen ist, die an seiner seitlichen Oberfläche geformt sind.

11. Das Federscharnier gemäß einem oder mehreren der obigen Ansprüche, **dadurch gekennzeichnet, dass** der Stöpsel (36) aus Kunststoffmaterial besteht.

12. Ein Verfahren zum Zusammenbau eines Scharniers gemäß einem beliebigen der obigen Ansprüche, das folgende Schritte umfasst:
a. Platzierung eines Bügels (29), der mit dem verlängerten Behälterelement (27) verbunden ist, im Wesentlichen angrenzend zu der Vorderseite (3) eines Rahmens für eine Brille, verbunden mit dem Vorsprung (2),
b. Einsetzen, entlang einer Achse (4), die in Längsrichtung zu dem Bügel (29) verläuft, des kugelförmigen Kopfs (18) des Scharniers in den zweiten Sitz (6) des Vorsprungs (2), wobei der Vorsprung (2) in einem rechten Winkel aus der Vorderseite (3) herausragt,
c. eine Translationsbewegung, an der Seite, die der Vorderseite (3) gegenüberliegt, des kugelförmigen Kopfs (18) innerhalb der geneigten Führung (8), die in dem Vorsprung (2) bereitgestellt ist,
d. Aufnahme des kugelförmigen Kopfs (18) in dem ersten, kugelförmigen Sitz (5), der in dem Vorsprung (2) geformt ist,
e. Drehung des Bügels (29) fort von der Vorderseite (3),
f. Drehung des Bügels (29) um seine eigene Längsachse,
g. Schließen des zweiten Sitzes (6) mit dem Stöpsel (35), um so die Bewegung des Kopfes (18) in einer axialen Richtung zu blockieren.

## Revendications

1. Charnière élastique, en particulier pour branches de lunettes monoblocs, comprenant :
un étrier (2) qui peut être relié à une face avant (3) d'une monture de lunettes de telle sorte qu'il fasse saillie à partir de ladite face avant (3) de ladite monture, ledit étrier s'étendant selon un axe longitudinal (4) et comportant un premier siège sphérique (5) qui est relié à un deuxième siège cylindrique (6) comportant un axe (7) qui est sensiblement perpendiculaire audit axe longitudinal (4) dudit étrier (2),
un élément de liaison sensiblement allongé (17) qui supporte une tête sphérique (18) à une première extrémité, les dimensions de ladite tête (18) étant telles qu'elle puisse être reçue à l'intérieur dudit premier siège (5) et buter contre la surface latérale dudit premier siège (5), ledit élément de liaison (17) comprenant une région allongée (21), qui est sensiblement en forme de tige, et qui supporte de façon coaxiale des moyens élastiques constitués par un élément élastique (22), qui est interposé entre une première butée (23) formée à une extrémité dudit élément de liaison (17) qui se trouve à l'opposé de l'extrémité qui supporté ladite tête (18) et un élément de verrouillage (24) qui est supporté de façon à pouvoir coulisser par ledit élément de liaison (17) à l'aide de ladite région allongée (21),
un élément de confinememt allongé (27) adapté de façon à être relié à une branche d'une monture de lunettes, ou à être formé directement dans celle-ci, une cavité (30) étant formée longitudinalement à l'intérieur dudit élément de confinement (27), ladite cavité (30) étant ouverte à une première extrémité (31) dudit élément de confinement (27) et étant appropriée pour contenir au moins partiellement ledit élément de liaison (17), ledit élément de verrouillage (24) et ledit élément élastique (22),
ladite tête sphérique (18) étant susceptible de se déplacer axialement par rapport audit élément de confinement (27) à l'encontre dudit élément élastique (22),
**caractérisée en ce que** ladite tête sphérique (18) fait complètement saillie à partir de ladite cavité (30), et **en ce que** ledit premier siège sphérique (5) est relié à l'aide d'un premier conduit (8) qui est incliné par rapport à l'axe longitudinal (4) dudit étrier (2) audit deuxième siège cylindrique (6), la tête sphérique (18) pouvant être insérée à l'intérieur du deuxième siège (6), à partir d'où elle peut être déplacée en translation à l'intérieur du conduit incliné (8) vers le premier siège sphérique (5), la charnière comprenant de plus un bouchon (35) qui est inséré de façon détachable à l'intérieur dudit deuxième siège (6) de façon à empêcher un coulissement axial de ladite tête (18).

2. Charnière élastique selon la revendication 1, **caractérisée en ce que** ledit étrier (2) comporte une fente d'extrémité (10), qui est disposée le long dudit axe longitudinal (4) et forme deux épaulements (11a, 11b) entre lesquels ledit premier siège (5), ledit deuxième siège (6) et ledit conduit (8) sont disposés, la distance entre ladite paire d'épaulements (11a, 11b) étant inférieure à un diamètre dudit premier siège (5).

3. Charnière élastique selon la revendication 2, **caractérisée en ce que** chacun desdits épaulements (11a, 11b) forme, sur ledit étrier (2), une première surface supérieure (12a) et une deuxième surface avant (12b), ledit étrier (2) comprenant de plus, sur le côté opposé par rapport audit deuxième siège (6), une surface ayant un certain contour fermée (13) qui forme, à proximité du bas dudit deuxième siège (6), une troisième surface inférieure sensiblement plate (14), qui se fond avec une quatrième surface incurvée (15), au niveau de laquelle ledit premier siège (5) et ledit conduit (8) sont formés dans une région supérieure.

4. Charnière élastique selon la revendication 3, **caractérisée en ce que** ladite troisième surface inférieure (14) est inclinée par rapport à ladite première surface supérieure (12a) et diverge par rapport à celle-ci dans la direction opposée par rapport audit deuxième siège (6).

5. Charnière élastique selon la revendication 4, **caractérisée en ce qu'**une dent de butée (16) est formée sur ledit étrier (2) à chacune desdites premières surfaces supérieures (12a), fait saillie à partir de la première surface supérieure respective (12a), à proximité dudit deuxième siège (6), et est dirigée vers ladite deuxième surface avant (12b).

6. Charnière élastique (1) selon l'une ou plusieurs des revendications précédentes, **caractérisée en ce que** ladite tête sphérique (18) est reliée, à l'aide d'une tige (40), à un corps (19) qui fait partie dudit élément de liaison (17) et qui forme des cinquièmes surfaces latérales (20) qui sont mutuellement parallèles, ladite région allongée (21) étant reliée à une extrémité audit corps (19).

7. Charnière élastique (1) selon la revendication 6, **caractérisée en ce que** ledit élément de verrouillage (24) est constitué par une bague qui supporte une pluralité d'ailettes longitudinales (25) qui ont une capacité de déformation élastique limitée, chacune desdits ailettes (25) comportant une région centrale plus étroite (26), lesdites régions centrales (26) formant une région ayant un diamètre réduit le long d'un périmètre extérieur dudit élément de verrouillage (24).

8. Charnière élastique (1) selon la revendication 7, **caractérisée en ce qu'**une deuxième butée (33) est formée le long d'une surface intérieure (32) de ladite cavité (30), et est constituée par une saillie qui s'étend vers l'intérieur de ladite cavité (30) et qui peut être reçue à l'intérieur de ladite région plus étroite desdites ailettes longitudinales (25).

9. Charnière élastique (1) selon la revendication 8, **caractérisée en ce que** ladite cavité (30) comporte, à ladite extrémité ouverte, une ou plusieurs fentes (34), qui sont formées sur une partie de ladite surface intérieure (32) et qui ont un contour tel qu'elles viennent en prise contre au moins une partie desdites cinquièmes surfaces latérales (20).

10. Charnière élastique selon l'une ou plusieurs des revendications précédentes, **caractérisée en ce que** ledit bouchon (35) comporte une ou plusieurs gorges ou fentes circonférentielles (36) formées sur sa surface latérale.

11. Charnière élastique selon l'une ou plusieurs des revendications précédentes, **caractérisée en ce que** ledit bouchon (36) est réalisé en matière plastique.

12. Procédé pour assembler une charnière selon l'une quelconque des revendications précédentes, comprenant les étapes consistant à :
a. disposer une branche (29) reliée audit élément de confinememt allongé (27) sensiblement au voisinage de ladite face avant (3) d'une monture de lunettes reliée audit étrier (2) ;
b. insérer, le long d'un axe (4) qui est longitudinal par rapport à ladite branche (29), ladite tête sphérique (18) de ladite charnière à l'intérieur dudit deuxième siège (6) dudit étrier (2), ledit étrier (2) faisant saillie à angle droit à partir dudit avant (3) ;
c. produire un mouvement de translation, sur le côté opposé par rapport à l'avant (3), de ladite tête sphérique (18) à l'intérieur dudit conduit incliné (8) disposé dans ledit étrier (2) ;
d. recevoir ladite tête sphérique (18) à l'intérieur dudit premier siège sphérique (5) formé dans ledit étrier (2) ;
e. faire tourner ladite branche (29) de façon à l'éloigner de ladite face avant (3) ;
f. faire tourner ladite branche (29) autour de son propre axe longitudinal ;
g. fermer ledit deuxième siège (6) avec ledit bouchon (35), de façon à bloquer le mouvement de ladite tête (18) dans une direction axiale.
